# EUROPÄISCHE PATENTSCHRIFT

(11) **EP 1 088 359 B1**
(45) Veröffentlichungstag und Bekanntmachung des Hinweises auf die Patenterteilung: **27.03.2002**
(21) Anmeldenummer: 99952132.1
(22) Anmeldetag: 20.05.1999
(51) Int. Cl.: H01M 8/04, H01M 8/24

(54) **BRENNSTOFFZELLENSYSTEM**
FUEL CELL SYSTEM
SYSTEME DE PILES A COMBUSTIBLE

(30) Priorität: 20.05.1998 DE 19822697
(43) Veröffentlichungstag der Anmeldung: 04.04.2001
(73) Patentinhaber: Fraunhofer-Gesellschaft zur Förderung der angewandten Forschung e.V., 80636 München (DE)
(72) Erfinder: MEYER, Tim, D-79106 Freiburg (DE); NOLTE, Roland, D-79211 Denzlingen (DE)
(74) Vertreter: Patent- und Rechtsanwaltssozietät, Maucher, Börjes & Kollegen
(86) Internationale Anmeldenummer: EP9903474
(87) Internationale Veröffentlichungsnummer: WO9960644

(56) Entgegenhaltungen:
- DE-C1- 19 636 903
- US-A- 5 543 240

## Beschreibung

Die Erfindung bezieht sich auf ein Brennstoffzellensystem mit mehreren Brennstoffzellen, die Anschlüsse für eine Gasquelle sowie elektrische Anschlüsse aufweisen, sowie mit einem oder mehreren Gasbehältern.
Brennstoffzellen sind elektrochemische Energiewandler, die chemische Energie mit hohem Wirkungsgrad direkt in elektrische Energie umwandeln können. Bei einem Brennstoffzellensystem nach dem Stand der Technik werden eine oder mehrere Brennstoffzellen oder ein aus mehreren Brennstoffzellen zusammengesetzter Brennstoffzellenstack über Anschlüsse zur Versorgung mit Prozeßgasen über Gaszuleitungen und Anschlüsse mit einem Speicher z.B. für Wasserstoff oder Methan und einem Speicher für Sauerstoff verbunden. Bei luftatmenden Brennstoffzellen tritt an die Stelle des Sauerstoffspeichers ein Lufteinzug. Die Entlüftung der Brennstoffzellen oder des Brennstoffzellenstacks und der Abtransport des Prozeßgasrückstandes (bei Versorgung mit Methan) erfolgt über Anschlüsse, Gasleitungen und Entlüftungsvorrichtungen.
Die von der Brennstoffzelle oder dem Brennstoffzellenstack aufgebaute Spannung wird über elektrische Anschlüsse abgegriffen und über Kabel einer elektrischen Last oder Spannungsaufbereitung zugeführt.
Soll zusätzlich ein Überwachungs- und Energiemanagementsystem den Zustand der Last, der Brennstoffzelle oder des Brennstoffzellenstacks und der Speicher und Entlüftungssysteme überwachen, beispielsweise um dem Nutzer mitteilen zu können, wieviel Energie dem Speicher noch entnommen werden kann, ob das System überlastet ist oder ein anderer Fehler vorliegt, muß zusätzlich eine Verkabelung zur Datenkommunikation zwischen den Komponenten mit entsprechenden Anschlüssen verlegt werden.
Soll die Leistung eines solchen Brennstoffzellensystems zur Versorgung einer größeren Last erweitert werden, können alle Komponenten den neuen Erfordernissen angepaßt, d.h. in der Praxis, daß alle Komponenten ausgetauscht werden. Dem bestehenden System kann zur Leistungsvergrößerung auch ein weiteres System parallel geschaltet werden. Je nach den Erfordernissen kann dabei die neue Brennstoffzelle gasseitig und elektrisch zum bestehenden System parallel geschaltet werden oder eine nur elektrische Parallelschaltung vorgenommen werden und die Gasversorgung des zweiten Systems getrennt von der des ersten Systems erfolgen. In allen Fällen müssen Gasleitungen und elektrische Kabel neu verlegt oder geändert werden. Des weiteren können die Komponenten in den meisten Fällen nicht mehr optimal genutzt werden, weil die zur Systemerweiterung verwendeten Leistungseinheiten in ihrer Kapazität überdimensioniert sind und andere Leistungseinheiten nicht erhältlich sind. Bei entsprechenden räumlichen Gegebenheiten kann die schlechte Raumausnutzung eines auf die beschriebene Art und Weise erweiterten Systems zu weiteren Problemen führen.

Aufgabe der vorliegenden Erfindung ist es, ein Brennstoffzellensystem zu schaffen, das schnell und einfach an unterschiedliche Anforderungen weitgehend optimal anpassbar ist. Dabei soll sowohl die Montage als auch ein Umstellen des Systems, beispielsweise zur Leistungserweiterung auch von Nicht-Fachleuten problemlos durchführbar sein.

Zur Lösung dieser Aufgabe wird vorgeschlagen, daß das Brennstoffzellensystem als Bausatz modular aufgebaut ist und wenigstens ein Verteilermodul als Trägerbasis für mehrere Brennstoffzellenmodule sowie für wenigstens einen Gasbehälter aufweist, daß das Verteilermodul von außen zugängliche Anschlußstellen sowie Kupplungen zum mechanischen Verbinden für die Brennstoffzellenmodule sowie für wenigstens einen Gasbehälter aufweist, daß die Anschlußstellen für Brennstoffzellenmodule jeweils mit elektrischen Kontakten und zumindest einem Gasanschluß, die Anschlußstelle für einen Gasbehälter mit einem Gasanschluß ausgebildet sind, daß elektrische Anschlußstellen zum Anschließen eines elektrischen Verbrauchers vorgesehen sind und daß das Verteilermodul die einzelnen Anschlußstellen miteinander verbindende, elektrische Verbindungsleitungen und Gasverbindungsleitungen aufweist.
Das zentrale Verteilermodul in Verbindung mit dem modularen Aufbau der daran anschließbaren Komponenten ermöglicht die Zusammenstellung eines Brennstoffzellensystem auf besonders einfache Weise, wobei durch die Anzahl und eventuell auch durch unterschiedliche Größe der Module eine exakte und optimierte Anpassung an die jeweiligen Leistungs-Anforderungen möglich ist. Auch nachträglich läßt sich dieses Modulsystem anpassen, indem z.B. Brennstoffzellenmodule hinzugefügt werden. Weiterhin ist vorteilhaft, daß defekte Module bzw. Komponenten einfach ausgetauscht werden können. Auch ist wegen des einfachen Systemaufbaus zum Ausbau oder Umbau keine Fachkraft mehr erforderlich. Die Modularität erhöht darüber hinaus die Verfügbarkeit des Systems, da bei Ausfall z.B. einer Brennstoffzelle oder eines Brennstoffzellenstacks die übrigen Komponenten weiter funktionstüchtig bleiben, so daß beim Defekt einer Komponente lediglich die Systemleistung verringert wird, bis ein Austausch der defekten Komponente erfolgt ist. Außerdem wird durch die Modularisierung der Einsatz standardisierter Komponenten in größerer Stückzahl möglich, was die Systemkosten senkt.

Eine Weiterbildung der Erfindung sieht vor, daß das Verteilermodul Anschlußstellen zum Verbinden mit wenigstens einem weiteren Verteilermodul aufweist und daß an dieser oder diesen Anschlußstellen zumindest Gasanschlüsse sowie elektrische Anschlüsse vorgesehen sind. Damit besteht die Möglichkeit der stufenweisen Erweiterung des Brennstoffzellensystems über die Kapazität eines einzigen, voll bestückten Verteilermoduls hinaus.
Zweckmäßigerweise sind bei den Anschlußstellen des Verteilermoduls Schnelltrennverschlüsse und Steckverbinder zum Anschließen von Brennstoffzellenmodulen, Gasbehältern sowie weiteren Verteilermodulent vorgesehen. Somit können die mit dem Verteilermodul verbindbaren Komponenten schnell und unkompliziert angeschlossen werden, wobei sich die Montagetätigkeit auf das Aufstecken bei der jeweiligen Anschlußstelle und das mechanische Sichern, z.B. durch einen Bajonett-Verschluß oder dergleichen beschränkt. Fachkenntnisse sind somit weder bei der Grundmontage noch bei einem Umbau erforderlich.

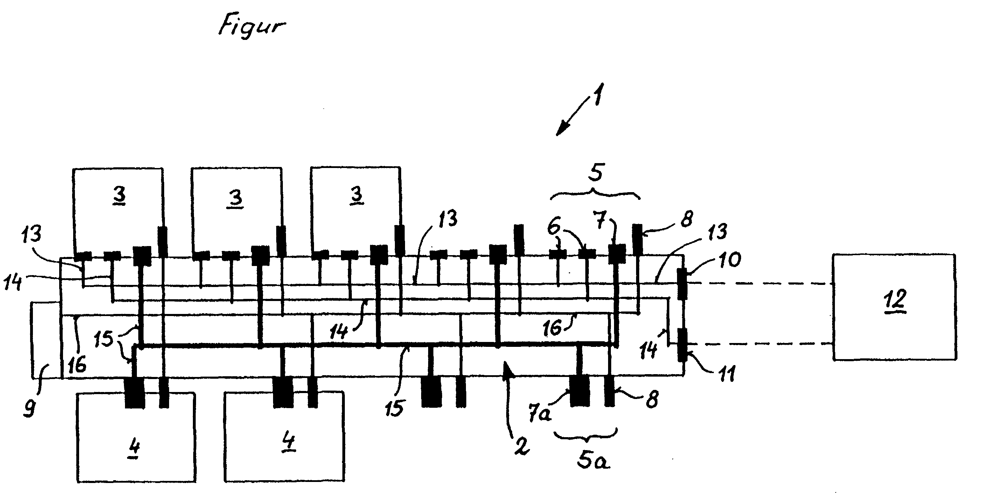

Nach einer Ausgestaltung der Erfindung besteht die Möglichkeit, daß das Verteilermodul Anschlußstellen für eine oder mehrere Steuereinheiten aufweist oder das wenigstens eine Steuereinheit in ein Verteilermodul integriert ist und daß die Steuereinheit vorzugsweise als Überwachungs- und Energiemanagementsystem ausgebildet ist. Bei vorhandenen Anschlüssen für eine Steuereinheit kann diese auch noch nachträglich angebaut werden. Eine im Anschlußmodul integrierte Steuereinheit begünstigt einen besonders kompakten Aufbau des Systems.
Vorteilhaft ist es, wenn die Anschlußstellen des Verteilermoduls für Brennstoffzellenmodule und für Gasbehälter universell jeweils zum wahlweisen Anschließen eines Brennstoffzellenmoduls oder eines Gasbehälters ausgebildet ist. Dies erhöht die Flexibilität des Systems erheblich, da die Variationsmöglichkeiten beim Bestücken des Verteilermoduls dadurch wesentlich vergrößert sind. Vor allem in Verbindung mit einer Variationsmöglichkeit der Größe der Brennstoffzellenmodule und/oder der Gasbehälter ist eine sehr exakte Anpassung des Systems an die jeweiligen Anforderungen und damit in weiten Grenzen für praktisch alle Anwendungsfälle eine Optimierung bei der Leistungsauslegung möglich.
Gegebenenfalls können in das Verteilermodul eine oder mehere Energieaufbereitungseinheiten integriert sein. Da die einzelnen Brennstoffzellen nur eine geringe Ausgangsspannung liefern, kann mit Hilfe der Energieaufbereitungseinheit eine Umwandlung in eine gewünschte Ausgangsgröße vorgenommen werden. Die Energieaufbereitungeinheit kann beispielsweise einen DC/DC-Wandler oder einen DC/AC-Wandler aufweisen.
Weiterhin besteht die Möglichkeit, daß die Brennstoffzellenmodule eine integrierte Spannungsaufbereitung aufweisen und/oder als Brennstoffzellen-Stacks ausgebildet sind. Damit liefern die Brennstoffzellenmodule selbst bereits eine höhere Spannung, so daß damit gegebenenfalls eine direkte Versorgung eines Verbrauchers möglich oder in Kombination mit einer Energieaufbereitungseinheit eine noch höhere Betriebsspannung erzeugbar ist. Brennstoffzellenmodule mit mehreren in Reihe geschalteten Brennstoffzellen sind aus der DE 196 36 903 C1 bereits bekannt. Zusätzliche Ausgestaltungen der Erfindung sind in den weiteren Unteransprüchen aufgeführt. Nachstehend ist die Erfindung mit ihren wesentlichen Einzelheiten anhand der Zeichnung noch näher erläutert.

Die einzige Fig. zeigt:
eine schematische Darstellung eines modular aufgebauten Brennstoffzellensystems.

Ein in der Fig. gezeigtes Brennstoffzellensystem 1 ist modular aufgebaut und weist als wesentliche Modul-Bestandteile ein Verteilermodul 2 sowie mehrere, daran angeschlossene Brennstoffzellenmodule 3 sowie mehere daran angeschlossene Gasbehälter 4 auf. Im gezeigten Ausführungsbeispiel können an das Verteilermodul 2 bis zu fünf Brennstoffzellenmodule 3 und bis zu vier Gasbehälter 4 angeschlossen werden. Das Verteilermodul 2 weist dazu Anschlußstellen 5, 5a auf. Die Anschlußstellen 5 für die Brennstoffzellenmodule 3 haben jeweils elektrische Kontakte 6 und einen Gasanschluß 7. Außerdem ist noch ein Anschlußkontakt 8 vorgesehen, über den die Brennstoffzellenmodule 3 jeweils mit einer Steuereinheit 9 verbunden sind.
Die Anschlußstellen 5a für Gasbehälter 4 haben einen Gasanschluß 7a sowie ebenfalls einen Anschlußkontakt 8 zum Verbinden mit der Steuereinheit 9.
Handelt es sich um luftatmende Brennstoffzellen, wie im Ausführungsbeispiel dargestellt, so genügt ein einziger Gasanschluß 7. Werden andere Brennstoffzellen verwendet, so ist dementsprechend auch noch zur Zuführung eines weiteren Prozeßgases ein zusätzlicher Gasanschluß mit im Verteilermodul 2 geführten Rohrleitungen und zusätzlichen Gasanschlüssen für entsprechende Gasbehälter vorgesehen.
Erwähnt sei noch, daß insbesondere der Anschlußkontakt 8 auch ein mehrpoliges Kontaktsystem umfassen kann, über das ein Datenaustausch zwischen dem jeweils angeschlossenen Modul und der Steuereinheit 9 möglich ist. Dementsprechend ist dann auch die Verbindungsleitung 16 zwischen den verschiedenen Anschlußstellen 5, 5a und zu der Steuereinheit 9 mehrpolig ausgebildet.
Die Steuereinheit 9 ist vorzugsweise als Überwachungs- und Energiemanagementsystem ausgebildet, mittels dem eine Ablaufsteuerung, Fehlererkennung, Lastüberwachung, weiterhin eine Überwachung der Brennstoffzellen, der Gasbehälter auf Füllzustand und dergleichen möglich ist. Somit bildet die Verbindungsleitung 16 zwischen den Anschlußkontakten 8 und der Steuereinheit 9 eine Datenkommunikationsleitung, über die Daten zwischen der Steuereinheit 9 und den angeschlossenen Modulen bzw. Komponenten ausgetauscht werden können.
Die Steuereinheit 9 kann integraler Bestandteil des Verteilermoduls 2 sein oder aber die Steuereinheit 9 kann auch extern an das Verteilermodul 2 angeschlossen werden.

Wie gut erkennbar, sind die einzelnen Anschlüsse der Anschlußstellen 5, 5a innerhalb des Verteilermoduls 2 über Leitungen 13, 14 miteinander verbunden. Im Ausführungsbeispiel sind die elektrischen Kontakte 6 der Anschlußstellen 5 zur Leistungserhöhung parallel geschaltet und an Anschlüsse 10 und 11 geführt, bei denen ein Verbraucher bzw. eine elektrische Last 12 anschließbar ist.

Die elektrischen Leitungen 13 und 14 können auch so ausgeführt sein, daß sich eine Reihenschaltung der angeschlossenen Brennstoffzellenmodule oder Brennstoffzellenstacks ergibt.
Die Gasanschlüsse 7 für die Brennstoffzellenmodule 3 und die Gasanschlüsse 7a für die Gasbehälter 4 sind miteinander über Rohrleitungen 15 verbunden. Innerhalb dieses Gas-Leitungssystems können hier nicht dargestellte Druckregler zur Druckanpassung zwischen den Gasbehältern und den Brennstoffzellenmodulen vorgesehen sein.
Im gezeigten Ausführungsbeispiel sind die Anschlußstellen 5, 5a unterschiedlich ausgebildet, so daß an die Anschlüsse 5 nur Brennstoffzellenmodule 3 und an die Anschlußstellen 5a nur Gasbehälter 4 anschließbar sind. Es besteht aber auch die Möglichkeit, am Verteilermodul 2 gleichartige Anschlußstellen vorzusehen, an die dann wahlsweise Gasbehälter oder Brennstoffzellenmodule 3 anschließbar sind. Alle Anschlußstellen würden in diesem Falle Anschlüsse entsprechend den Anschlußstellen 5 aufweisen, wobei die Gegenanschlußstellen an den Brennstoffzellenmodulen und an den Gasbehältern entsprechend zugeordnet ist. An den Stellen, wo sich die elektrischen Kontakte 6 bei der Anschlußstelle 5 befinden, würden dementsprechend bei den Gasbehältern keine Gegenkontakte vorhanden sein. Durch diese universellen Anschlußstellen kann eine Bestückung des Verteilermoduls 2 in den unterschiedlichsten Konfigurationen für entsprechend unterschiedliche Anwendungen vorgenommen werden. Beispielsweise könnte für einen Kurzzeitbetrieb mit hoher Leistung einer oder wenige Gasbehälter 4 vorgesehen sein und alle restlichen Anschlußstellen könnten in diesem Falle mit Brennstoffzellenmodulen 3 bestückt werden. Umgekehrt besteht auch die Möglichkeit, für einen Langzeitbetrieb eine entsprechend große Anzahl von Gasbehältern 4 vorzusehen und nur ein oder wenige Brennstoffzellenmodule 3. Selbstverständlich sind auch alle Zwischenlösungen möglich, wobei auch die Größe der Brennstoffzellenmodule und/oder der Gasbehälter 4 variiert werden kann.

Bei den Anschlußstellen 5, 5a sind nicht dargestellte Kupplungen zum mechanischen Verbinden der Module - Brennstoffzellenmodule, Gasbehälter, Steuereinheit - mit dem als Trägerbasis dienenden Verteilermodul 2 vorhanden. Sowohl die mechanischen Verbindungselemente als auch die elektrischen Kontakte und die Gasanschlüsse sind so ausgebildet, daß die einzelnen Module praktisch mit einem Handgriff am Verteilermodul 2 angebracht oder aber auch entfernt werden können. Zweckmäßigerweise sind dafür bei den Gasanschlüssen Schnelltrennverschlüsse vorgesehen, die beim Entfernen eines Modules für ein selbsttätiges, dichtes Abschließen der dort mündenden Rohrleitung 15 sorgen. Die elektrischen Anschlüsse können Steckverbindunger sein und als mechanische Kupplungen können beispielsweise Bajonettkupplungen, Steck-Rastkupplungen oder dergleichen vorgesehen sein.

Das Verteilermodul 2 kann noch Anschlußstellen mit elektrischen Kontakten, Gasanschluß, Anschluß für die Steuereinheit 9 sowie einer mechanischen Kupplung aufweisen, wobei diese Anschlußstelle zum Verbinden mit wenigstens einem weiteren Verteilermodul 2 dient. Damit kann das Brennstoffzellensystem erweitert werden, wenn die Anschlußstellen 5, 5a eines Verteilermodules 2 mit Modulen voll bestückt ist, eine weitere Leistungssteigerung jedoch erforderlich ist. Sowohl das Bestücken oder Ändern der Bestückung eines Verteilermodules 2 mit Brennstoffzellenmodulen 3 bzw. Gasbehältern 4, als auch das Erweitern um ein oder mehrere Verteilermodule 2 ist einfach vorzunehmen und es ist dazu kein Fachmann erforderlich, so daß dies auch von dem Nutzer selbst durchgeführt werden kann.

Das Verceilermodul 2 kann als Kunststoffgehäuse ausgebildet sein, in dem sich die Verbindungsleitungen und bedarfweise auch noch im Verteilermodul integrierte Komponenten - Druckregler, Steuereinheit, Spannungsaufbereitung - befinden können. Die Bauform des Verteilermodules 2 und auch die Lage und Ausbildung der Anschlußstellen 5, 5a kann entsprechend den räumlichen Vorgaben unterschiedlich ausgebildet sein.
Erwähnt sei noch, daß auch bidirektionale Brennstoffezellen verwendet werden können oder ein Anschluß für einen Elektrolyseur an einem der Anschlußstellen 5, so daß dann die Möglichkeit gegeben ist, unter Leistungsaufnahme die Gasbehälter 4 wieder zu befüllen. Hierzu ist es dann erforderlich, entsprechende Anschlüsse zum Zuführen von Wasser für die Elektrolyse vorzusehen.

Kurz zusammengefaßt weist das erfindungsgemäße, modulare Erennstoffzellensystem im wesentlichen folgende Vorteile auf:
Durch den modularen Aufbau können einzelne Brennstoffzellenmodule und Gasbehälter für Prozeßgase durch einfaches Aufstecken auf das oder Abziehen von dem Verteilermodul mechanisch fest montiert werden;
mit dem Aufsetzen der Module wird gleichzeitig eine gasseitige und eine elektrische Verbindung sowie eine Verbindung zur Datenkommunikation zwischen den Komponenten hergestellt;
die BrennstoffzellenkönnenauchdurchElektrolyseureersetzt werden oder bidirektional arbeitende Zellen sein;
es können Brennstoffzellen mit integriertem Spannungswandler verwendet werden;
der Umbau des Brennstoffzellensystems erfordert keine Neuverlegung von Kabeln oder Gasleitungen und kannauch von Nichtfachleuten vorgenommen werden;
die Systemleistung kann variabel den Erfordernissen angepaßt werden;
ein bestücktes Verteilermodul kann für größere Systemleistungen mit weiteren bestückten Verteilermodulen zusammengeschaltet werden.

## Patentansprüche

1. Brennstoffzellensystem mit mehreren Brennstoffzellen, die Anschlüsse für eine Gasquelle sowie elektrische Anschlüsse aufweisen, sowie mit einem oder mehreren Gasbehältern, **dadurch gekennzeichnet, daß** das Brennstoffzellensystem (1) als Bausatz modular aufgebaut ist und wenigstens ein Verteilermodul (2) als Trägerbasis für mehrere Brennstoffzellenmodule sowie für wenigstens einen Gasbehälter aufweist, daß das Verteilermodul (2) von außen zugängliche Anschlußstellen (5, 5a) sowie Kupplungen zum mechanischen Verbinden für die Brennstoffzellenmodule sowie für wenigstens einen Gasbehälter aufweist, daß die Anschlußstellen (5) für Brennstoffzellenmodule (3) jeweils mit elektrischen Kontakten (6) und zumindest einem Gasanschluß (7), die Anschlußstelle (5a) für einen Gasbehälter (4) mit einem Gasanschluß (7a) ausgebildet sind, daß elektrische Anschlußstellen (10,11) zum Anschließen eines elektrischen Verbrauchers (12) vorgesehen sind und daß das Verteilermodul (2) die einzelnen Anschlußstellen (5,5a) miteinander verbindende, elektrische Verbindungsleitungen (13,14) und Gasverbindungsleitungen (15) aufweist.

2. Brennstoffzellensystem nach Anspruch 1, **dadurch gekennzeichnet, daß** das Verteilermodul (2) Anschlußstellen zum Verbinden mit wenigstens einem weiteren Verteilermodul (2) aufweist und daß an dieser oder diesen Anschlußstellen zumindest Gasanschlüsse sowie elektrische Anschlüsse vorgesehen sind.

3. Brennstoffzellensystem nach Anspruch 1 oder 2, **dadurch gekennzeichnet, daß** bei den Anschlußstellen (5,5a) des Verteilermoduls (2) Schnelltrennverschlüsse und Steckverbinder zum Anschließen von Brennstoffzellenmodulen (3), Gasbehältern (4) sowie weiteren Verteilermodulen vorgesehen sind.

4. Brennstoffzellensystem nach einem der Ansprüche 1 bis 3, **dadurch gekennzeichnet, daß** das Verteilermodul (2) Anschlußstellen für eine oder mehrere Steuereinheiten (9) aufweist oder daß wenigstens eine Steuereinheit (9) in ein Verteilermodul integriert ist und daß die Steuereinheit vorzugsweise als Überwachungs-und Energiemanagementsystem ausgebildet ist.

5. Brennstoffzellensystem nach einem der Ansprüche 1 bis 4, **dadurch gekennzeichnet, daß** bei den Anschlußstellen (5) für Brennstoffzellenmodule (3) und den Anschlußstellen (5a) für Gasbehälter (4) Anschlußkontakte (8) und diese mit der Steuereinheit verbindende, elektrische Leitungen (16) im Verteilermodul (2) vorgesehen sind.

6. Brennstoffzellensystem nach einem der Ansprüche 1 bis 5, **dadurch gekennzeichnet, daß** die Anschlußstellen (5,5a) des Verteilermoduls (2) für Brennstoffzellenmodule (3) und für Gasbehälter (4) universell jeweils zum wahlweisen Anschließen eines Brennstoffzellenmoduls oder eines Gasbehälters ausgebildet sind.

7. Brennstoffzellensystem nach einem der Ansprüche 1 bis 6, **dadurch gekennzeichnet, daß** das Verteilermodul (2) einen oder mehrere Druckregler zur Druckanpassung zwischen den Gasbehältern und den Brennstoffzellenmodulen aufweist.

8. Brennstoffzellensystem nach einem der Ansprüche 1 bis 7, **dadurch gekennzeichnet, daß** in das Verteilermodul (2) eine oder mehrere Energieaufbereitungseinheiten integriert sind.

9. Brennstoffzellensystem nach einem der Ansprüche 1 bis 8, **dadurch gekennzeichnet, daß** die Brennstoffzellenmodule (3) eine integrierte Spannungsaufbereitung aufweisen und/oder als Brennstoffzellen-Stacks ausgebildet sind.

10. Brennstoffzellensystem nach einem der Ansprüche 1 bis 9, **dadurch gekennzeichnet, daß** die Anschlußstellen des Verteilermoduls für bidirektionale Brennstoffzellenmodule oder einen Elektrolyseur einen Anschluß zum Zuführen von Wasser zu den Brennstoffzellen beziehungsweise zu dem Elektrolyseur aufweist.

11. Brennstoffzellensystem nach einem der Ansprüche 1 bis 10, **dadurch gekennzeichnet, daß** die Brennstoffzellenmodule sowie die Gasbehälter als standartisierte Komponenten ausgebildet sind.

12. Brennstoffzellensystem nach einem der Ansprüche 1 bis 11, **dadurch gekennzeichnet, daß** das Verteilermodul (2) ein Gehäuse vorzugsweise aus Kunststoff mit darin integrierten Leitungen, Anschlüssen und dergleichen Einbauteilen bildet, das außenseitig zumindest die Anschlußstellen für die Brennstoffzellenmodule sowie die Gasbehälter aufweist.

## Claims

1. A fuel cell system with a plurality of fuel cells, which have connections for a gas source and electrical connections, and with one or more gas containers, **characterised in that** the fuel cell system (1) is configured as a modular kit and has at least one distributor module (2) as a support base for a plurality of fuel cell modules and for at least one gas container, that the distributor module (2) has externally-accessible connection points (5, 5a) and couplings for mechanical connection of the fuel cell modules and for at least one gas container, that the connection points (5) for fuel cell modules (3) are each fitted with electrical contacts (6) and at least one gas connection (7), and the connection point (5a) for a gas container (4) is fitted with a gas connection. (7a), that electrical connection points (10, 11) are provided for attaching an electrical consumer (12) and that the distributor module (2) has electrical connection lines (13, 14) and gas connection lines (15) to connect the individual connection points (5, 5a) to one another.

2. A fuel cell system according to claim 1, **characterised in that** the distributor module (2) has connection points for connecting to at least one further distributor module (2) and that at least gas connections and electrical connections are provided at this or these connection points.

3. A fuel cell system according to claim 1 or 2, **characterised in that** in the case of the connection points (5, 5a) of the distributor module (2), rapid-separation couplers and plug-in connectors are provided to connect fuel cell modules (3), gas containers and other distributor models.

4. A fuel cell system according to one of claims 1 to 3, **characterised in that** the distributor model (2) has connection points for one or more control units (9) or that at least one control unit (9) is integrated in a distributor module and that the control unit is preferably configured as a monitoring and energy management system.

5. A fuel cell system according to one of claims 1 to 4, **characterised in that** in the case of the connection points (5) for fuel cell modules (3) and the connection points (5a) for gas containers, connection contacts (8) and electrical supply lines (16) which connect these with the control unit are provided in the distributor module (2).

6. A fuel cell system according to one of claims 1 to 5, **characterised in that** the connection points (5, 5a) of the distributor module (2) for fuel cell modules (3) and for gas containers (4) are universally configured for selective attachment of a fuel cell module or a gas container.

7. A fuel cell system according to one of claims 1 to 6, **characterised in that** the distributor module (2) has one or more pressure regulators to equalise the pressure between the gas containers and the fuel cell modules.

8. A fuel cell system according to one of claims 1 to 7, **characterised in that** one or more energy processing modules are integrated in the distributor module (2).

9. A fuel cell system according to one of claims 1 to 8, **characterised in that** the fuel cell modules (3) have an integrated voltage processor and/or are configured as fuel cell stacks.

10. A fuel cell system according to one of claims 1 to 9, **characterised in that** the connection points of the distributor module for bidirectional fuel cell modules or an electrolyser have a connection for supplying water to the fuel cells and the electrolyser.

11. A fuel cell system according to one of claims 1 to 10, **characterised in that** the fuel cell modules and the gas containers are configured as standardised components.

12. A fuel cell system according to one of claims 1 to 11, **characterised in that** the distributor module (2) forms a housing, preferably made from plastic, with integrated supply lines, connectors and similar installed parts, having on its exterior at least the connection points for the fuel cell modules and the gas containers.

## Revendications

1. Système de piles à combustible comprenant plusieurs piles à combustible qui présentent des raccordements pour une source de gaz et des raccordements électriques, ainsi qu'un ou plusieurs réservoirs de gaz, **caractérisé en ce que** le système de piles à combustible (1) est construit de façon modulaire, en tant que jeu d'éléments de construction, et présente au moins un module de distribution (2) comme base de support pour plusieurs modules de piles à combustible et pour au moins un réservoir de gaz, **en ce que** le module de distribution (2) présente des points de raccordement (5, 5a) accessibles de l'extérieur et des dispositifs d'accouplement pour réaliser des liaisons mécaniques pour les modules de piles à combustible et pour au moins un réservoir de gaz, **en ce que** les points de raccordement (5) pour des modules de piles à combustible (3) sont munis de contacts électriques (6) et d'au moins un raccordement pour le gaz (7), **en ce que** le point de raccordement (5a) pour un réservoir de gaz (4) est réalisé muni d'un raccordement pour le gaz (7a), **en ce que** des points de raccordement électrique (10, 11) sont prévus pour brancher un consommateur électrique (12) et **en ce que** le module de distribution (2) présente des conduites de raccordement électrique (13, 14) reliant entre eux les différents points de raccordement (5, 5a) et des conduites de raccordement pour le gaz (15).

2. Système de piles à combustible selon la revendication 1, **caractérisé en ce que** le module de distribution (2) présente des points de raccordement pour le relier à au moins un autre module de distribution (2) et **en ce qu'**au niveau de ce ou de ces point(s) de raccordement sont au moins prévus des raccordements pour le gaz et des raccordements électriques.

3. Système de piles à combustible selon la revendication 1 ou 2, **caractérisé en ce qu'**au niveau des points de raccordement (5, 5a) du module de distribution (2) sont prévus des fermetures rapides et des connecteurs à fiche pour raccorder des modules de piles à combustible (3), des réservoirs de gaz (4) et d'autres modules de distribution.

4. Système de piles à combustible selon l'une des revendications 1 à 3, **caractérisé en ce que** le module de distribution (2) présente des points de raccordement pour une ou plusieurs unités de commande (9) ou **en ce qu'**au moins une unité de commande (9) est intégrée dans un module de distribution, et **en ce que** l'unité de commande est de préférence réalisée en tant que système de contrôle et de gestion de l'énergie.

5. Système de piles à combustible selon l'une des revendications 1 à 4, **caractérisé en ce que**, dans le module de distribution (2), à proximité des points de raccordement (5) pour des modules de piles à combustible (3) et des points de raccordement (5a) pour des réservoirs de gaz (4), sont prévus des contacts de raccordement (8) et des conduites électriques (16) reliant ces derniers à l'unité de commande.

6. Système de piles à combustible selon l'une des revendications 1 à 5, **caractérisé en ce que** les points de raccordement (5, 5a) du module de distribution (2) sont réalisés de façon universelle pour des modules de piles à combustible (3) et pour des réservoirs de gaz (4,) afin de pouvoir y raccorder indifféremment un module de piles à combustible ou un réservoir de gaz.

7. Système de piles à combustible selon l'une des revendications 1 à 6, **caractérisé en ce que** le module de distribution (2) présente un ou plusieurs régulateurs de pression pour adapter la pression entre les réservoirs de gaz et les modules de piles à combustible.

8. Système de piles à combustible selon l'une des revendications 1 à 7, **caractérisé en ce qu'**une ou plusieurs unités de préparation de l'énergie sont intégrées dans le module de distribution (2).

9. Système de piles à combustible selon l'une des revendications 1 à 8, **caractérisé en ce que** les modules de piles à combustible (3) présentent un dispositif de préparation de la tension intégré et/ou sont réalisés en tant qu'empilements de piles à combustible.

10. Système de piles à combustible selon l'une des revendications 1 à 9, **caractérisé en ce que** les points de raccordement du module de distribution présentent, pour des modules de piles à combustible bidirectionnels ou pour un électrolyseur, un raccordement pour alimenter en eau les piles à combustible ou l'électrolyseur.

11. Système de piles à combustible selon l'une des revendications 1 à 10, **caractérisé en ce que** les modules de piles à combustible et les réservoirs de gaz sont réalisés en tant que composants standardisés.

12. Système de piles à combustible selon l'une des revendications 1 à 11, **caractérisé en ce que** le module de distribution (2) forme un boîtier de préférence en matière plastique dans lequel sont intégrés des conduites, des raccordements et des éléments analogues, et qui présente à l'extérieur au moins les points de raccordement pour les modules de piles à combustible et les réservoirs de gaz.
